(19) Europäisches Patentamt

European Patent Office

Office européen des brevets

(11) **EP 1 355 295 B1**

(12) **EUROPEAN PATENT SPECIFICATION**

(45) Date of publication and mention
of the grant of the patent:
**25.05.2011 Bulletin 2011/21**

(51) Int Cl.:
***G10L 15/14*** *(2006.01)*

(21) Application number: **03252309.4**

(22) Date of filing: **11.04.2003**

(54) **Speech recognition apparatus, speech recognition method, and computer-readable recording medium in which speech recognition program is recorded**

Spracherkennungsvorrichtung, -verfahren und computerlesbares Medium mit entsprechend gespeichertem Programm

Appareil et méthode de reconnaissance vocale et support lisible par un ordinateur, contenant un tel programme

(84) Designated Contracting States:
**DE FR GB**

(30) Priority: **17.04.2002 JP 2002114631**

(43) Date of publication of application:
**22.10.2003 Bulletin 2003/43**

(73) Proprietor: **Pioneer Corporation
Kanagawa 212-0031 (JP)**

(72) Inventor: **Kawazoe, Yoshihiro,
c/o Pioneer Corporation
Tsurugashima-shi,
Saitama-ken (JP)**

(74) Representative: **Haley, Stephen
Gill Jennings & Every LLP
The Broadgate Tower
20 Primrose Street
London EC2A 2ES (GB)**

(56) References cited:
- **WILPON J G ET AL: "AUTOMATIC RECOGNITION OF KEYWORDS IN UNCONSTRAINED SPEECH USING HIDDEN MARKOV MODELS" IEEE TRANSACTIONS ON ACOUSTICS, SPEECH AND SIGNAL PROCESSING, IEEE INC. NEW YORK, US, vol. 38, no. 11, 1 November 1990 (1990-11-01), pages 1870-1878, XP000171007 ISSN: 0096-3518**
- **CHIGIER B: "Rejection and keyword spotting algorithms for a directory assistance city name recognition application" DIGITAL SIGNAL PROCESSING 2, ESTIMATION, VLSI. SAN FRANCISCO, MAR. 23 - 26, 1992, PROCEEDINGS OF THE INTERNATIONAL CONFERENCE ON ACOUSTICS, SPEECH AND SIGNAL PROCESSING (ICASSP), NEW YORK, IEEE, US, vol. 5 CONF. 17, 23 March 1992 (1992-03-23), pages 93-96, XP010058852 ISBN: 0-7803-0532-9**

## Description

The present invention relates to a technical field regarding speech recognition by an HMM (Hidden Markov Models) method and, particularly, to a technical field regarding recognition of keywords from spontaneous speech.

In recent years, speech recognition apparatus have been developed which recognize spontaneous speech uttered by man. When a man speaks predetermined words, these devices recognize the spoken words from their input signals.

For example, various devices equipped with such a speech recognition apparatus, such as a navigation system mounted in a vehicle for guiding the movement of the vehicle and personal computer, will allow the user to enter various information without the need for manual keyboard or switch selecting operations.

Thus, for example, the operator can enter desired information in the navigation system even in a working environment where the operator is driving the vehicle by using his/her both hands

Typical speech recognition methods include a method which employs probability models known as HMM (Hidden Markov Models).

In the speech recognition, the spontaneous speech is recognized by matching patterns of feature values of the spontaneous speech with patterns of feature values of speech which are prepared in advance and represent candidate words called keywords.

Specifically, in the speech recognition, feature values of inputted spontaneous speech (input signals) divided into segments of a predetermined duration are extracted by analyzing the inputted spontaneous speech, the degree of match (hereinafter referred to as likelihood) between the feature values of the input signals and feature values of keywords represented by HMMs prestored in a database is calculated, likelihood over the entire spontaneous speech is accumulated, and the keyword with the highest likelihood as a recognized keyword is decided.

Thus, in the speech recognition, the keywords is recognized based on the input signals which is spontaneous speech uttered by man.

Incidentally, an HMM is a statistical source model expressed as a set of transitioning states. It represents feature values of predetermined speech to be recognized such as a keyword. Furthermore, the HMM is generated based on a plurality of speech data sampled in advance.

It is important for such speech recognition how to extract keywords contained in spontaneous speech.

Beside keywords, spontaneous speech generally contains extraneous speech, i.e. previously known words that is unnecessary in recognition (words such as "er" or "please" before and after keywords), and in principle, spontaneous speech consists of keywords sandwiched by extraneous speech.

Conventionally, speech recognition often employs "word-spotting" techniques to recognize keywords to be speech-recognized.

In the word-spotting techniques, HMMs which represent not only keyword models but also and HMMs which represent extraneous speech models (hereinafter referred to as garbage models) are prepared, and spontaneous speech is recognized by recognizing a keyword models, garbage models, or combination thereof whose feature values have the highest likelihood.

"Automatic Recognition of Keywords in Unconstrained Speech using Hidden Markov Models" by Jay G. Wilpon et al., discusses a system and method for automatic recognition of keywords in unconstrained speech by means of a grammar connecting extraneous speech models with keyword models.

However, the device for recognizing spontaneous speech described above is prone to mis-recognition because if unexpected extraneous speech is uttered, the device cannot recognize the extraneous speech or extract keywords property.

The present invention has been made in view of the above problems. Its object is to provide a speech recognition apparatus which can achieve high speech recognition performance without increasing the data quantity of feature values of extraneous speech.

The above object of the present invention can be achieved by a speech recognition apparatus for recognizing at least one of keywords contained in uttered spontaneous speech, as claimed in claim 1.

According to the present invention, the extraneous speech contained in spontaneous speech is identified based on the extracted spontaneous-speech feature value and stored extraneous-speech component feature data.

Accordingly, since extraneous speech is identified based on the stored extraneous-speech component feature data, it can be identified properly using a small amount of data in recognizing the extraneous speech. Therefore, it is possible to increase identifiable extraneous speech without increasing the amount of data required to recognize extraneous speech and improve the accuracy with which keyword is extracted and recognized.

According to the present invention, the extraneous speech contained in spontaneous speech is identified based on the extraneous-speech component feature data which represents one data of feature value of the speech ingredients which has been obtained by combining feature values of a plurality of the extraneous-speech components.

Accordingly, since a plurality of extraneous speech in spontaneous speech can be identified based on one of the stored extraneous-speech component feature data, it is possible to identify the extraneous speech properly using a small amount of data in recognizing the extraneous speech.

In one aspect of the present invention, the extraneous-speech component feature data prestored in the database is a plurality of data indicative of feature value of speech ingredient, obtained by combining the feature values of a plurality of the extraneous-speech components.

According to the present invention, the extraneous speech contained in spontaneous speech is identified based on extraneous-speech component feature data which has data of characteristics of feature values of speech ingredient of a plurality of the extraneous-speech components.

Accordingly, since a plurality of extraneous speech in spontaneous speech can be identified based on one of the stored extraneous-speech component feature data, it is possible to identify the extraneous speech properly using a small amount of data in recognizing the extraneous speech.

In one aspect of the present invention, the extraneous-speech component feature data prestored in the database has data of feature values of the speech ingredient of a plurality of the extraneous-speech components.

According to the present invention, the extraneous speech contained in spontaneous speech is identified based on the extraneous-speech component feature data which has data of feature values of the speech ingredient of a plurality of the extraneous-speech components.

Accordingly, since a plurality of extraneous speech in spontaneous speech can be identified based on one of the stored extraneous-speech component feature data and identification accuracy of extraneous speech can be protected from degradation which would result when a plurality of feature values are synthesized, it is possible to identify the extraneous speech properly using a small amount of data in recognizing the extraneous speech.

Generally, there are a huge number of words to be recognised including extraneous speech, but there are a limited number of phonemes or syllables which compose these words.

Accordingly, in the identification of extraneous speech, since all extraneous speech can be identified based on extraneous-speech component feature values stored in each phoneme or syllable, it is possible to identify the extraneous speech properly without increasing the data quantity of the extraneous-speech component features values to be identified and improve the accuracy with which keywords are extracted and recognised.

In one aspect of the present invention, the speech recognition apparatus of the present invention is further provided with a calculation device for calculating likelihood which indicates probability that at least part of the feature values of the extracted spontaneous speech is matched with the extraneous-speech component feature data stored in the database and the acquired keyword feature data, wherein at least one of the keyword and the extraneous speech contained in the spontaneous speech is identified based on the calculated likelihood.

According to the present invention, likelihood which indicates probability that at least part of the feature values of the extracted spontaneous speech is matched with the extraneous-speech components feature data and the acquired keyword feature data is calculated; and at least one of the keywords and the extraneous speech contained in the spontaneous speech is identified based on the calculated likelihood.

Accordingly, in the identification of the extraneous speech, since the extraneous speech and keyword in contained in the spontaneous speech can be identified based on the extraneous-speech component feature data and keyword feature data it is possible to identify the extraneous speech properly without increasing the data quantity of the extraneous-speech component feature values to be identified and improve the accuracy with which keywords are extracted and recognized.

The above object of the present invention can also be achieved by a speech recognition method of recognizing at least one of keywords contained in uttered spontaneous speech, as claimed in claim 3.

According to the present invention, the extraneous speech contained in spontaneous speech is identified based on the extracted spontaneous-speech feature value and stored extraneous-speech component feature data.

Accordingly, since extraneous speech is identified based on the stored extraneous-speech component feature data, it can be identified properly using a small amount of data in recognizing the extraneous speech. Therefore, it is possible to increase identifiable extraneous speech without increasing the amount of data required to recognize extraneous speech and improve the accuracy with which keyword is extracted and recognized.

According to the present invention, the extraneous speech contained in spontaneous speech is identified based on the extraneous-speech component feature data which represents one data of feature value of the speech ingredients which has been obtained by combining feature values of a plurality of the extraneous-speech components.

Accordingly, since a plurality of extraneous speech in spontaneous speech can be identified based on one of the stored extraneous-speech component feature data, it is possible to identify the extraneous speech properly using a small amount of data in recognizing the extraneous speech.

In one aspect of the present invention, the acquiring process acquires the extraneous-speech component feature data prestored in the database, the extraneous-speech component feature data having a plurality of data indicative of feature value of speech ingredient, obtained by combining the features of a plurality of the extraneous-speech components.

According to the present invention, the extraneous speech contained in spontaneous speech is identified based on extraneous-speech component feature data which has data of characteristics of feature values of speech ingredient of a plurality of the extraneous-speech components.

Accordingly, since a plurality of extraneous speech in spontaneous speech can be identified based on one of the stored extraneous-speech component feature data, it is possible to identify the extraneous speech properly using a small amount of data in recognizing the extraneous speech.

In one aspect of the present invention, the second acquiring process acquires the extraneous-speech component feature data prestored in the database, the extraneous-speech component feature data having data of feature values of the speech ingredient of a plurality of the extraneous-speech components.

According to the present invention, the extraneous speech contained in spontaneous speech is identified based on the extraneous-speech component feature data which has data of feature values of the speech ingredient of a plurality of the extraneous-speech components.

Accordingly, since a plurality of extraneous speech in spontaneous speech can be identified based on one of the stored extraneous-speech component feature data and identification accuracy of extraneous speech can be protected from degradation which would result when a plurality of feature values are synthesized, it is possible to identify the extraneous speech property using a small amount of data in recognizing the extraneous speech.

Generally, there are a huge number of words to be recognized inducing extraneous speech, but there are a limited number of phonemes or syllables which compose those words.

Accordingly, in the identification of extraneous speech, since all extraneous speech can be identified based on extraneous-speech component feature values stored in each phoneme or syllable, it is possible to identify the extraneous speech properly without increasing the data quantity of the extraneous-speech component feature values to be identified and improve the accuracy with which keywords are extracted and recognized.

In one aspect of the present invention, the recognition process comprises:

a calculation process of calculating likelihood which indicates probability that at least part of the feature values of the extracted spontaneous speech is matched with the extraneous-speech component feature data stored in the database and the acquired keyword feature data; wherein
at least one of the keyword and the extraneous speech contained in the spontaneous speech is identified based on the calculated likelihood.

According to the present invention, likelihood which indicates probability that at least part of the feature values of the extracted spontaneous speech is matched with the extraneous-speech component feature data and the acquired keyword feature data is calculated; and at least one of the keywords and the extraneous speech contained in the spontaneous speech is identified based on the calculated likelihood.

Accordingly, in the identification of extraneous speech, since the extraneous speech and keyword in contained in the spontaneous speech can be identified based on the extraneous-speech component feature data and keyword feature data it is possible to identify the extraneous speech properly without increasing the data quantity of the extraneous-speech component feature values to be identified and improve the accuracy with which keywords are extracted and recognized.

The above object of the present invention can also be achieved by a recording medium wherein a speech recognition program is recorded so as to be read by a computer, as claimed in claim 5.

According to the present invention, the extraneous speech contained in spontaneous speech is identified based on the extracted spontaneous-speech feature value and stored extraneous-speech component feature data.

Accordingly, since extraneous speech is identified based on the stored extraneous-speech component feature data, it can be identified properly using a small amount of data in recognizing the extraneous speech. Therefore, it is possible to increase identifiable extraneous speech without increasing the amount of data required to recognize extraneous speech and improve the accuracy with which keyword is extracted and recognized.

According to the present invention, the extraneous speech contained in spontaneous speech is identified based on the extraneous-speech component feature data which represents one data of feature value of the speech ingredients which has been obtained by combining feature values of a plurality of the extraneous-speech components.

Accordingly, since a plurality of extraneous speech in spontaneous speech can be identified based on one of the stored extraneous-speech component feature data, it is possible to identify the extraneous speech properly using a small amount of data in recognizing the extraneous speech.

In one aspect of the present invention, speech recognition program causes the computer to function as: the acquiring device acquires the extraneous-speech component feature data prestored in the database, the extraneous-speech component feature data is a plurality of data indicative of feature value of speech ingredient, obtained by combining feature values of a plurality of the extraneous-speech components.

According to the present invention, the extraneous speech contained in spontaneous speech is identified based on extraneous-speech component feature data which has data of characteristics of feature values of speech ingredient of a plurality of the extraneous-speech components.

Accordingly, since a plurality of extraneous speech in spontaneous speech can be identified based on one of the stored extraneous-speech component feature data, it is possible to identify the extraneous speech properly using a small amount of data in recognizing the extraneous speech.

In one aspect of the present invention, speech recognition program causes the computer to function as: the acquiring device acquires the extraneous-speech component feature data prestored in the database, the extraneous-speech component feature data having data of feature values of the speech ingredient of a plurality of the extraneous-speech components.

According to the present invention, the extraneous speech contained in the spontaneous speech is identified based on the extraneous-speech component feature data which has data of feature values of the speech ingredient of a plurality of the extraneous-speech components.

Accordingly, since a plurality of extraneous speech in spontaneous speech can be identified based on one of the stored extraneous-speech component feature data and identification accuracy of extraneous speech can be protected from degradation which would result when a plurality of feature values are synthesized, it is possible to identify the extraneous speech properly using a small amount of data in recognizing the extraneous speech.

Generally, there are a huge number of words to be recognized including extraneous speech, but there are a limited number of phonemes or syllables which compose these words.

Accordingly, in the identification of extraneous speech, since all extraneous speech can be identified based on extraneous-speech component feature values stored in each phoneme or syllable, it is possible to identify the extraneous speech properly without increasing the data quantity of the extraneous-speech component feature values to be identified and improve the accuracy with which keywords are extracted and recognized.

In one aspect of the present invention, speech recognition program causes the computer to function as: the recognition process comprises:

a calculating device for calculating likelihood which indicates probability that at least part of the feature values of the extracted spontaneous speech is matched with the extraneous-speech component feature data stored in the database and the acquired keyword feature data; and a recognition device for identifying at least one of the keyword and the extraneous speech contained in the spontaneous speech based on the calculated likelihood.

According to the present invention, likelihood which indicates probability that at least part of the feature value of the extracted spontaneous speech is matched with the extraneous-speech components feature data and the acquired keyword feature data is calculated; and at least one of the keywords and the extraneous speech contained in the spontaneous speech is identified based on the calculated likelihood.

Accordingly, in the identification of extraneous speech, since the extraneous speech and keyword in contained in the spontaneous speech can be identified based on the extraneous-speech component feature data and keyword feature data it is possible to identify the extraneous speech properly without increasing the data quantity of the extraneous-speech component feature values to be identified and improve the accuracy with which keywords are extracted and recognized.

In the drawings:-

FIG. 1 is a diagram showing an embodiment of a speech recognition apparatus, wherein an HMM-based speech language model is used;

FIG. 2 is a diagram showing an HMM-based speech language model for recognizing arbitrary spontaneous speech;

FIG. 3A is graphs showing cumulative likelihood of an extraneous-speech HMM for an arbitrary combination of extraneous speech and a keyword;

FIG. 3B is graphs showing cumulative likelihood of extraneous-speech component HMM for an arbitrary combination of extraneous speech and a keyword;

FIG. 4 is a diagram showing configuration of the speech recognition apparatus according to the present invention;

FIG. 5 is a flowchart showing operation of a keyword recognition process;

FIG. 6 is a diagram showing a speech recognition apparatus according to the present invention, wherein an HMM-based speech language model is used;

FIG. 7A is exemplary graphs showing feature vector vs. output probability of extraneous-speech component HMMs according to the present invention;

FIG. 7B is exemplary graphs showing feature vector vs. output probability of extraneous-speech component HMMs according to the present invention; and

FIG. 8 is graphs showing output probability of an extraneous-speech component HMM obtained by integrating a plurality of extraneous-speech component HMMs according to the present invention.

The present invention will now be described with reference to the drawings.

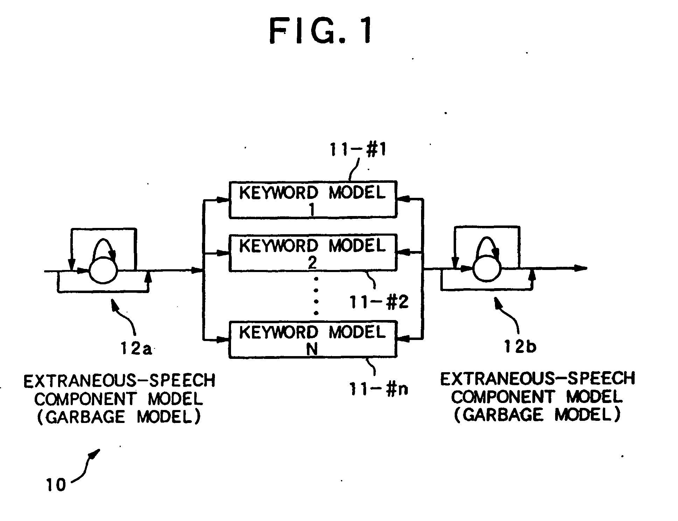

FIGS. 1 to 4 are diagrams showing an example of an embodiment of a speech recognition apparatus.

Extraneous-speech components described in this embodiment represent basic phonetic units, such as phonemes or syllables, which compose speech, but syllables will be used in this embodiment for convenience of the following explanation.

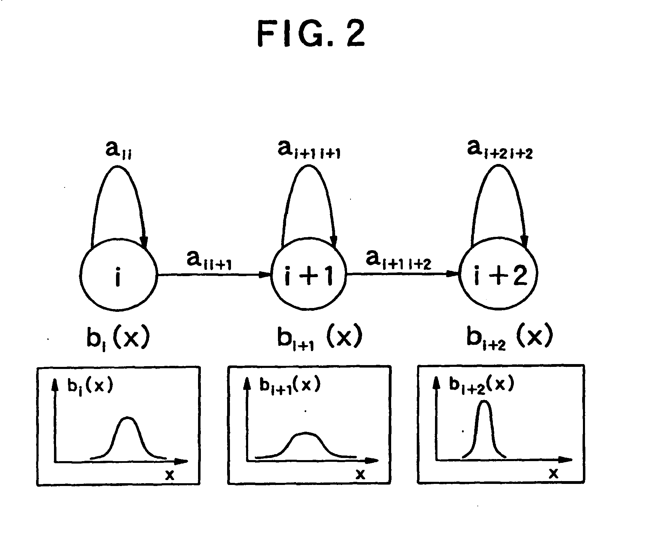

First, an HMM-based speech language model according to this embodiment will be described with reference to FIG. 1 and FIG. 2.

FIG. 1 is a diagram showing an HMM-based speech language model of a recognition network according to this embodiment, and FIG. 2 is a diagram showing a speech language model for recognizing arbitrary spontaneous speech using arbitrary HMMs.

This embodiment assumes a model (hereinafter referred to as a speech language model) which represents an HMM-based recognition network such as the one shown in FIG. 1, i.e., a speech language model 10 which contains keywords to be recognized.

The speech language model 10 consists of keyword models 11 connected at both ends with garbage models (hereinafter referred to as component models of extraneous-speech) 12a and 12b which represent components of extraneous speech. In case where keyword contained in spontaneous speech is recognized, a keyword contained in spontaneous speech is identified by matching the keyword with the keyword models 11, and extraneous speech contained in spontaneous speech is identified by matching the extraneous speech with the component models of extraneous-speech 12a and 12b.

Actually, the keyword models 11 and component models of extraneous-speech 12a and 12b represent a set of states which transition each arbitrary segments of spontaneous speech. The statistical source models "HMMs" which is an unsteady source represented by combination of steady sources composes the spontaneous speech.

The HMMs of the keyword models 11 (hereinafter referred to as keyword HMMs) and the HMMs of the extraneous-speech component models 12a and 12b (hereinafter referred to as extraneous-speech component HMMs) have two types of parameter. One parameter is a state transition probability which represents the probability of the state transition from one state to another, and another parameter is an output probability which outputs the probability that a vector (feature vector for each frame) will be observed when a state transitions from one state to another. Thus, the HMMs of the keyword models 11 represents a feature pattern of each keyword, and extraneous-speech component HMMs 12a and 12b represents feature pattern of each extraneous-speech component.

Generally, since even the same word or syllable shows acoustic variations for various reasons, speech sounds composing spontaneous speech vary greatly with the speaker. However, even if uttered by different speakers, the same speech sound can be characterized mainly by a characteristic spectral envelope and its time variation. Stochastic characteristic of a time-series pattern of such acoustic variation can be expressed precisely by an HMM.

Thus, as described below, according to this embodiment, keywords contained in the spontaneous speech are recognized by matching feature values of the inputted spontaneous speech with keyword HMMs and extraneous-speech HMMs and calculating likelihood.

Incidentally, the likelihood indicates probability that feature values of the inputted spontaneous speech is matched with keyword HMMs and extraneous-speech.

According to this embodiment, a HMM is a feature pattern of speech ingredient of each keyword or feature value of speech ingredient of each extraneous-speech component. Furthermore, the HMM is a probability model which has spectral envelope data that represents power at each frequency at each regular time intervals or cepstrum data obtained from an inverse Fourier transform of a logarithm of the power spectrum.

Furthermore, the HMMs are created and stored beforehand in each databases by acquiring spontaneous speech data of each phonemes uttered by multiple people, extracting feature patterns of each phonemes, and learning feature pattern data of each phonemes based on the extracted feature patterns of the phonemes.

When keywords contained in spontaneous speech are recognized by using such HMMs, the spontaneous speech to be recognized is divided into segments of a predetermined duration and each segment is matched with each prestored data of the HMMs, and then the probability of the state transition of these segments from one state to another are calculated based on the results of the matching process to identify the keywords to be recognized.

Specifically, in this embodiment, the feature value of each speech segment are compared with the each feature pattern of prestored data of the HMMs, the likelihood for the feature value of each speech segment to match the HMM feature patterns is calculated, cumulative likelihood which represents the probability for a connection among all HMMs, i.e., a connection between a keyword and extraneous speech is calculated by using matching process (described later), and the spontaneous speech is recognized by detecting the HMM connection with the highest likelihood.

The HMM, which represents an output probability of a feature vector, generally has two parameters: a state transition probability and an output probability b, as shown in FIG. 2. The output probability of an inputted feature vector is given by a combined probability of a multidimensional normal distribution and the likelihood of each state is given by Eq. (1).

$$b_i(x) = \frac{1}{\sqrt{(2\pi)^P \left| \sum_i \right|}} \exp\left( -\frac{1}{2}(x - \mu_i)' \sum_i^{-1} (x - \mu_i) \right) \quad \text{Eq.(1)}$$

where x is the feature vector of an arbitrary speech segment, $\Sigma_i$ is a covariance matrix, $\lambda$ is a mixing ratio, $\mu_i$ is an average vector of feature vectors learned in advance, and P is the number of dimensions of the feature vector of the arbitrary speech segment.

FIG. 2 is a diagram showing a state transition probability a which indicates a probability when an arbitrary state i changes to another state (i + n),and output probability b with respect to the state transition probability a. Each graph in FIG. 2 shows an output probability that an inputted feature vector in a given state will be output.

Actually, logarithmic likelihood, which is the logarithm of Eq. (1) above, is often used for speech recognition, as shown in Eq. (2).

$$\log b_i(x) = -\frac{1}{2}\log\left[(2\pi)\right]^P \left| \sum_i \right| - \frac{1}{2}(x - \mu_i)' \sum_i^{-1} (x - \mu_i) \quad \text{Eq. (2)}$$

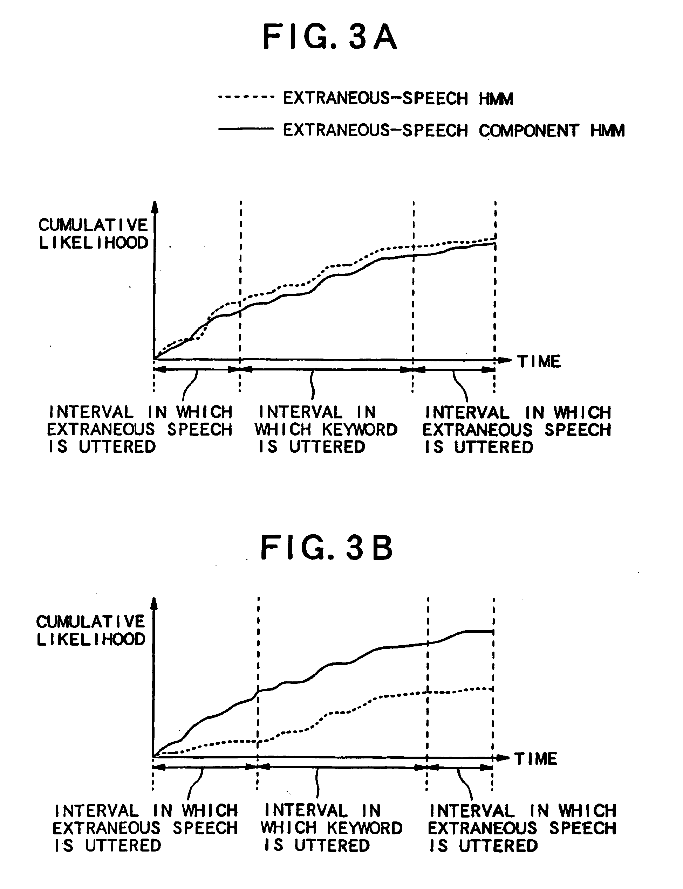

Next, an extraneous-speech component HMM which is a garbage model will be described with reference to FIG. 3.

FIG. 3 is graphs showing cumulative likelihood of an extraneous-speech HMM and extraneous-speech component HMM in an arbitrary combination of extraneous speech and a keyword.

As described above, in the case of conventional speech recognition apparatus, since extraneous-speech models are composed of HMMs which represent feature values of extraneous speech as with keyword models, to identify extraneous speech contained in spontaneous speech, the extraneous speech to be identified must be stored beforehand in a database.

The extraneous speech to be identified can include all speech except keywords ranging from words which do not constitute keywords to unrecognizable speech with no linguistic content. Consequently, to recognize extraneous speech contained in spontaneous speech properly, HMMs must be prepared in advance for a huge volume of extraneous speech.

Thus, in the conventional speech recognition apparatus, data on feature values of every extraneous speech must be acquired to recognize extraneous speech contained in spontaneous speech properly, for example, by storing it in databases. Accordingly, a huge amount of data must be stored in advance, but it is physically impossible to secure areas for storing the data.

Furthermore, in the conventional speech recognition apparatus, it takes a large amount of labor to generate the huge amount of data to be stored in databases or the like.

On the other hand, extraneous speech is also a type of speech, and thus it consists of components such as syllables and phonemes, which are generally limited in quantity.

Thus, if extraneous speech contained in spontaneous speech is identified based on the extraneous-speech components, it is possible to reduce the amount of data to be prepared as well as to identify every extraneous speech properly.

Specifically, since any extraneous speech can be composed by combining components such as syllables and phonemes, if extraneous speech is identified using data on such components prepared in advance, it is possible to reduce the amount of data to be prepared and identify every extraneous speech properly.

Generally, a speech recognition apparatus which recognizes keywords contained in spontaneous speech divides the spontaneous speech into speech segments at predetermined time intervals (as described later), calculates likelihood that the feature value of each speech segment matches a garbage model (such as an extraneous-speech HMM) or each keyword model (such as a keyword HMM) prepared in advance, accumulates the likelihood of each combination of a keyword and extraneous speech based on the calculated likelihoods of each speech segments of each extraneous speech HMM and each keyword model HMM, and thereby calculates cumulative likelihood which represents HMM connections.

When extraneous-speech HMMs to recognize the extraneous speech included in the spontaneous speech are not prepared in advance as is the case with conventional speech recognition apparatus, feature values of speech in the portion corresponding to extraneous speech in spontaneous speech show low likelihood of a match with both extraneous-speech HMMs and keywords HMMs as well as low cumulative likelihood of them, which will cause misrecognition.

However, when speech segments are matched with an extraneous-speech component HMM, feature values of extraneous speech in spontaneous speech shows high likelihood of match with prepared data which represents feature values of extraneous-speech component HMMs. Consequently, if feature values of a keyword contained in the spontaneous speech match keyword HMM data, cumulative likelihood of the combination of the keyword and the extraneous speech contained in the spontaneous speech is high, making it possible to recognize the keyword properly.

For example, when extraneous-speech HMMs which indicates garbage models of the extraneous speech contained in spontaneous speech are provided in advance as shown in FIG. 3(a), there is no difference in cumulative likelihood from the case where an extraneous-speech component HMM is used, but when extraneous-speech. HMMs which indicates garbage models of the extraneous speech contained in spontaneous speech are not provided in advance as shown in FIG. 3(b), cumulative likelihood is low compared with the case where an extraneous-speech component HMM is used.

Thus, since this embodiment calculates cumulative likelihood using the extraneous-speech component HMM and thereby identifies extraneous speech contained in spontaneous speech, it can identify the extraneous speech properly and recognize keywords, using a small amount of data.

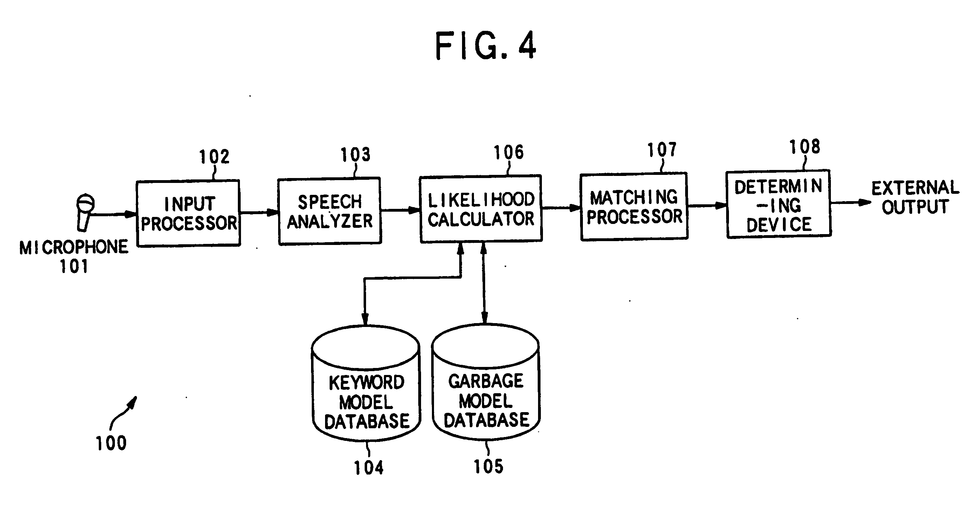

Next, configuration of the speech recognition apparatus according to this embodiment will be described with reference to FIG. 4.

FIG. 4 is a diagram showing a configuration of the speech recognition apparatus according to the first embodiment of the present invention.

As shown in FIG. 4, the speech recognition apparatus 100 comprises: a microphone 101 which receives spontaneous speech and converts it into electrical signals (hereinafter referred to as speech signals); input processor 102 which extracts speech signals that corresponds to speech sounds from the inputted speech signals and splits frames at a preset time interval; speech analyzer 103 which extracts a feature value of a speech signal in each frame; keyword model database 104 which prestores keyword HMMs which represent feature patterns of a plurality of keywords to be recognized; garbage model database 105 which prestores the extraneous-speech component HMM which represents feature patterns of extraneous-speech to be distinguished from the keywords; a likelihood calculator 106 which calculates the likelihood that the extracted feature value of each frame match the keyword HMMs and extraneous-speech component HMMs; matching processor 107 which performs a matching process (described later) based on the likelihood calculated on a frame-by-frame HMMs basis; and determining device 108 which determines the keywords contained in the spontaneous speech based on the results of the matching process.

The speech analyzer 103 serves as extraction device of the present invention, the keyword model database 104 and garbage model database 105 serve as database of the present invention. The likelihood calculator 106 serves as recognition device, calculation device, and acquiring device of the present invention. The matching processor 107 serves as recognition device and calculation device of the present invention. The determining device 108 serves as recognition device of the present invention.

In the input processor 102, the speech signals outputted from the microphone 101 is inputted. the input processor 102 extracts those parts of the speech signals which represent speech segments of spontaneous speech from the inputted speech signals, divides the extracted parts of the speech signals into time interval frames of a predetermined duration, and outputs them to the speech analyzer 103. For example, a frame has a duration about 10 ms to 20 ms.

The speech analyzer 103, analyzes the inputted speech signals frame by frame, extracts the feature value of the speech signal in each frame, and outputs it to the likelihood calculator 106.

Specifically, the speech analyzer 103 extracts spectral envelope data that represents power at each frequency at regular time intervals or cepstrum data obtained from an inverse Fourier transform of the logarithm of the power spectrum as the feature values of speech ingredient on a frame-by-frame basis, converts the extracted feature values into vectors, and outputs the vectors to the likelihood calculator 106.

The keyword model database 104 prestores keyword HMMs which represent pattern data of the feature values of the keywords to be recognized. Data of these stored a plurality of keyword HMMs represent patterns of the feature values of a plurality of the keywords to be recognized.

For example, if it is used in navigation system mounted a mobile, the keyword model database 104 is designed to store HMMs which represent patterns of feature values of speech signals including destination names or present location names or facility names such as restaurant names for the mobile.

As described above, according to this embodiment, an HMM which represents a feature pattern of speech ingredient of each keyword represents a probability model which has spectral envelope data that represents power at each frequency at regular time intervals or cepstrum data obtained from an inverse Fourier transform of the logarithm of the power spectrum.

Since a keyword normally consists of a plurality of phonemes or syllables as is the case with "present location" or "destination," according to this embodiment, one keyword HMM consists of a plurality of keyword component HMMs and the likelihood calculator 106 calculates frame-by-frame feature values and likelihood of each keyword component HMM.

In this way, the keyword model database 104 stores each keyword HMMs of the keywords to be recognized, that is, keyword component HMMs.

In the garbage model database 105, the HMM "the extraneous-speech component HMM" which is a language model used to recognize the extraneous speech and represents pattern data of feature values of extraneous-speech components is prestored.

According to this embodiment, the garbage model database 105 stores one HMM which represents feature values of extraneous-speech components. For example, if a unit of syllable-based HMM is stored, this extraneous-speech component HMM contains feature patterns which cover features of all syllables such as the Japanese syllablary, nasal, voiced consonants, and plosive consonants.

Generally, to generate an HMM of a feature value for each syllable, speech data of each syllables uttered by multiple people is preacquired, the feature pattern of each syllable is extracted, and feature pattern data of each syllable is learned based on the each syllable-based feature pattern. According to this embodiment, however, when generating the speech data, an HMM of all feature patterns is generated based on speech data of all syllables and the single HMM-- a language model-- is generated which represents the feature values of a plurality of syllables.

Thus, according to this embodiment, based on the generated feature pattern data, the single HMM, which is a language model, has feature patterns of all syllables is generated, and it is converted into a vector, and prestored in the garbage model database 105.

In the likelihood calculator 106, the feature vector of each frame is inputted, and likelihood calculator 106 calculates the likelihood by matching between each inputted HMM of each frame and each feature values of HMMs stored in each databases based on the inputted the feature vector of each frame, and outputs the calculated likelihood to the matching processor 107.

According to this embodiment, the likelihood calculator 106 calculates probabilities, including the probability of each frame corresponding to each HMM stored in the keyword model database 104 and the garbage model database 105 based on the feature values of each frames and the feature values of the HMMs stored in the keyword model database 104 and the garbage model database 105.

Specifically, the likelihood calculator 106 calculates output probabilities on a frame-by-frame basis: the output probability of each frame corresponding to each keyword component HMM, and the output probability of each frame corresponding to an extraneous-speech component. Furthermore, it calculates state transition probabilities: the state transition probability that a state transition from an arbitrary frame to the next frame is matched with a state transition from a keyword component HMM to another keyword component HMM, the state transition probability that a state transition from an arbitrary frame to the next frame is matched with a state transition from a keyword component HMM to an extraneous-speech component, and the probability that a state transition from an arbitrary frame to the next frame is matched with a state transition from the extraneous-speech component HMM to a keyword component HMM. Then, the likelihood calculator 106 outputs the calculated probabilities as likelihoods to the matching processor 107.

Incidentally, state transition probabilities include probabilities of a state transition from each keyword component HMM to the same keyword component HMM, and a state transition from an extraneous-speech component HMM to the same extraneous-speech component HMM as well.

According to this embodiment, the likelihood calculator 106 outputs each output probabilities and each state transition probabilities calculated for each frames to the matching processor 107 as each likelihood for the respective frames.

In the matching processor 107, the frame-by-frame output probabilities and each state transition probabilities are inputted. The matching processor 107 performs a matching process to calculate cumulative likelihood which is the likelihood of each combination of each keyword HMM and the extraneous-speech component HMM based on the inputted each output probabilities and each state transition probabilities, and outputs the calculated cumulative likelihood to the determining device 108.

Specifically, the matching processor 107 calculates one cumulative likelihood for each keyword (as described later), and cumulative likelihood without a keyword, i.e., cumulative likelihood of the extraneous-speech component model alone.

Incidentally, details of the matching process performed by the matching processor 107 will be described later.

In the determining device 108, the cumulative likelihood of each keyword which is calculated by the matching processor 107 is inputted, and the determining device 108 outputs the keyword with the highest cumulative likelihood determines it as a keyword contained in the spontaneous speech externally.

In deciding on the keyword, the determining device 108 uses the cumulative likelihood of the extraneous-speech component model alone as well. If the extraneous-speech component model used alone has the highest cumulative likelihood, the determining device 108 determines that no keyword is contained in the spontaneous speech and outputs this result externally.

Next, description will be given about the matching process performed by the matching processor 107 according to this embodiment.

The matching process according to this embodiment calculates the cumulative likelihood of each combination of a keyword model and an extraneous-speech component model using the Viterbi algorithm.

The Viterbi algorithm is an algorithm which calculates the cumulative likelihood based on the output probability of entering each given state and the transition probability of transitioning from each state to another state, and then outputs the combination whose cumulative likelihood has been calculated after the cumulative probability.

Generally, the cumulative likelihood is calculated first by integrating each Euclidean distance between the state represented by the feature value of each frame and the feature value of the state represented by each HMM, and then is calculated by calculating the cumulative distance.

Specifically, the Viterbi algorithm calculates cumulative probability based on a path which represents a transition from an arbitrary state i to a next state j, and thereby extracts each paths, i.e., connections and combinations of HMMs, through which state transitions can take place.

In this embodiment, the likelihood calculator 106 calculates each output probabilities and each state transition probabilities by matching the output probabilities of keyword models or the extraneous-speech component model and thereby state transition probabilities against the frames of the inputted spontaneous speech one by one beginning with the first divided frame and ending with the last divided frame, calculates the cumulative likelihood of an arbitrary combination of a keyword model and extraneous-speech components from the first divided frame to the last divided frame, determines the arrangement which has the highest cumulative likelihood in each keyword model/extraneous-speech component combination by each keyword model, and outputs the determined cumulative likelihoods of the keyword models one by one to the determining device 108.

For example, in case where the keywords to be recognized are "present location" and "destination" and the inputted spontaneous speech entered is "er, present location", the matching process according to this embodiment is performed as follows.

It is assumed here that extraneous speech is "er," that the garbage model database 105 contains one extraneous-speech component HMM which represents features of all extraneous-speech components, that the keyword database contains HMMs of each syllables of "present" and "destination," and that each output probabilities and state transition probabilities calculated by the likelihood calculator 106 has already been inputted in the matching processor 107.

In such a case, according to this embodiment, the Viterbi algorithm calculates cumulative likelihood of all arrangements in each combination of the keyword and extraneous-speech components for the keywords "present" and "destination" based on the output probabilities and state transition probabilities.

Specifically, when an arbitrary spontaneous speech is inputted, cumulative likelihoods of the following patterns of each combination are calculated based on the output probabilities and state transition probabilities: "p-r-e-se-n-t ####," "# p-r-e-se-n-t ####," "## p-r-e-se-n-t ##," "### p-r-e-se-n-t #," and "#### p-r-e-se-n-t" for the keyword of "p-r-e-se-n-t" and "d-e-s-t-i-n-a-ti-o-n ####," "# d-e-s-t-i-n-a-ti-o-n ###," "## d-e-s-t-i-n-a-ti-o-n ##," "### d-e-s-t-i-n-a-ti-o-n #," and "#### d-e-s-t-i-n-a-ti-o-n" for the keyword of "destination" (where # indicates an extraneous-speech component).

The Viterbi algorithm calculates the cumulative likelihoods of all combination patterns over all the frame of spontaneous speech beginning with the first frame for each keyword, in this case, "present vocation" and "destination."

Furthermore, in the process of calculating the cumulative likelihoods of each arrangement for each keyword, the Viterbi algorithm stops calculation halfway for those arrangements which have low cumulative likelihood, determining that the spontaneous speech do not match those combination patterns.

Specifically, in the first frame, either the likelihood of the HMM of "p," which is a keyword component HMM of the keyword "present location," or the likelihood of the extraneous-speech component HMM is included in the calculation of the cumulative likelihood. In this case, a higher cumulative likelihood provides the calculation of the next cumulative likelihood. In the above example, the likelihood of the extraneous-speech component HMM is higher than the likelihood of the HMM of "p," and thus calculation of the cumulative likelihood for "p-r-e-se-n-t ####" is terminated after "p."

Thus, in this type of matching process, only one cumulative likelihood is calculated for each keyword "present location" and "destination."

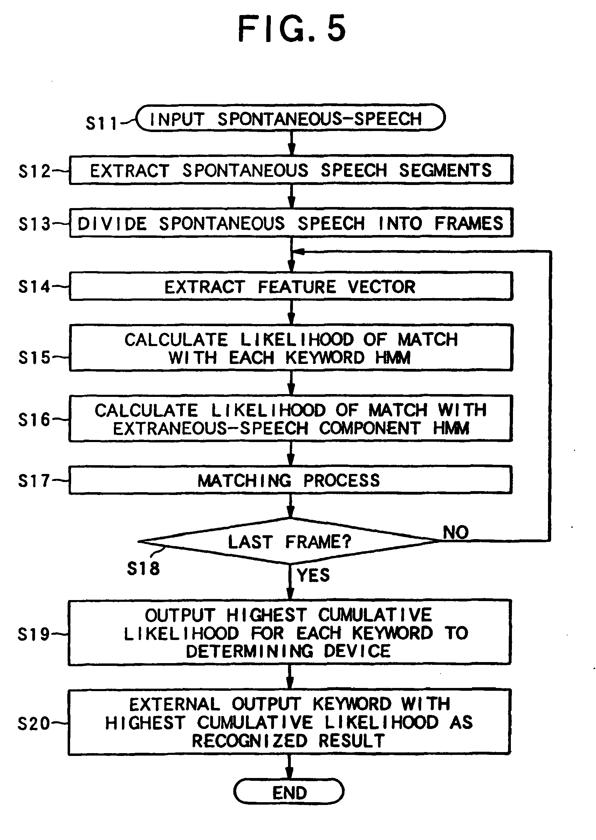

Next, a keyword recognition process according to this embodiment will be described with reference to FIG. 5.

FIG. 5 is a flowchart showing operation of the keyword recognition process according to this embodiment.

First, when a control panel or controller (not shown) inputs instruction each part to start a keyword recognition process and spontaneous speech is inputted the microphone 101 (Step S11), the input processor 102 extracts speech signals of the part of the spontaneous speech from inputted speech signals (Step S12), divides the extracted speech signals into frames of a predetermined duration, and outputs them to the speech analyzer 103 (Step S13) in each frame.

Then, this operation performs the following processes on a frame-by-frame basis.

First, the speech analyzer 103 extracts the feature value of the inputted speech signal in each frame, and outputs it to the likelihood calculator 106 (Step S14).

Specifically, based on the speech signal in each frame, the speech analyzer 103 extracts spectral envelope information that represents power at each frequency at regular time intervals or cepstrum information obtained from an inverse Fourier transform of the logarithm of the power spectrum as the feature values of speech ingredient, converts the extracted feature values into vectors, and outputs the vectors to the likelihood calculator 106.

Next, the likelihood calculator 106 compares the feature value of the inputted frame with the feature values of the HMMs stored in the keyword model database 104, calculates the output probability and state transition probability of the frame with respect to each HMM (as described above), and outputs the calculated output probabilities and state transition probabilities to the matching processor 107 (Step S15).

Then, the likelihood calculator 106 compares the feature value of the inputted frame with the feature value of the extraneous-speech component model HMM stored in the garbage model database 105, calculates the output probability and state transition probability of the frame with respect to the extraneous-speech component HMM (as described above), and outputs the calculated output probabilities and state transition probabilities to the matching processor 107 (Step S16).

Next, the matching processor 107 then calculates the cumulative likelihood of each keyword in the matching process described above (Step S17).

Specifically, the matching processor 107 integrates each likelihoods for each keyword HMM and the extraneous-speech component HMM, but eventually calculates only the highest cumulative likelihood for each type of each keyword.

Then, at the instruction of the controller (not shown), the matching processor 107 determines whether the given frame is the last divided frame (Step S18). If the matching processor 107 determines the last divided frame, the matching processor 107 outputs the highest cumulative likelihood for each keyword to the determining device 108 (Step S19). Otherwise, if the matching processor 107 does not determine the last divided frame, this operation performs the process of Step S14.

Finally, based on the cumulative likelihood of each keyword, the determining device 108 externally outputs the keyword with the highest cumulative likelihood as the keyword contained in the spontaneous speech (Step S20). This concludes the operation.

Thus, according to this embodiment, since cumulative likelihood using the extraneous-speech component HMM is calculated and thereby keywords contained in spontaneous speech is recognized, extraneous speech can be identified properly and the keywords can be recognized by using a smaller amount of data than before.

Specifically, with conventional speech recognition apparatus, since garbage models prepared in advance are HMMs of extraneous speech itself, to recognize extraneous speech properly, it is necessary to prepare language models of all extraneous speech that can be uttered.

However, according to this embodiment, since extraneous speech contained in spontaneous speech is identified based on extracted feature values of spontaneous speech and the stored extraneous-speech component HMM, the extraneous speech properly and recognize keywords can be identified by using a smaller amount of data than before.

Since a plurality of extraneous-speech components composing extraneous speech can be identified by one extraneous-speech component HMM, every extraneous speech can be identified by one extraneous-speech component HMM.

Consequently, spontaneous speech is identified properly using a small amount of data, making it possible to improve the accuracy with which keywords are extracted and recognized.

Incidentally, although extraneous-speech component models are generated based on syllables according to this embodiment, of course, they may be generated based on phonemes or other configuration units.

Furthermore, although one extraneous-speech component HMM is stored in the garbage model database 105 according to this embodiment, an HMM which represents feature values of extraneous-speech components may be stored for each group of a plurality of each type of phonemes, or each vowels, consonants.

In this case, the feature values computed on a frame-by-frame basis in the likelihood calculation process will be each extraneous-speech component HMM and likelihood of each extraneous-speech component.

Furthermore, although the keyword recognition process is performed by the speech recognition apparatus described above according to this embodiment, the speech recognition apparatus may be equipped with a computer and recording medium and a similar keyword recognition process may be performed as the computer reads a keyword recognition program stored on the recording medium.

On this speech recognition apparatus which executes the keyword recognition processing program, a DVD or CD may be used as the recording medium.

In this case, the speech recognition apparatus will be equipped with a reading device for reading the program from the recording medium.

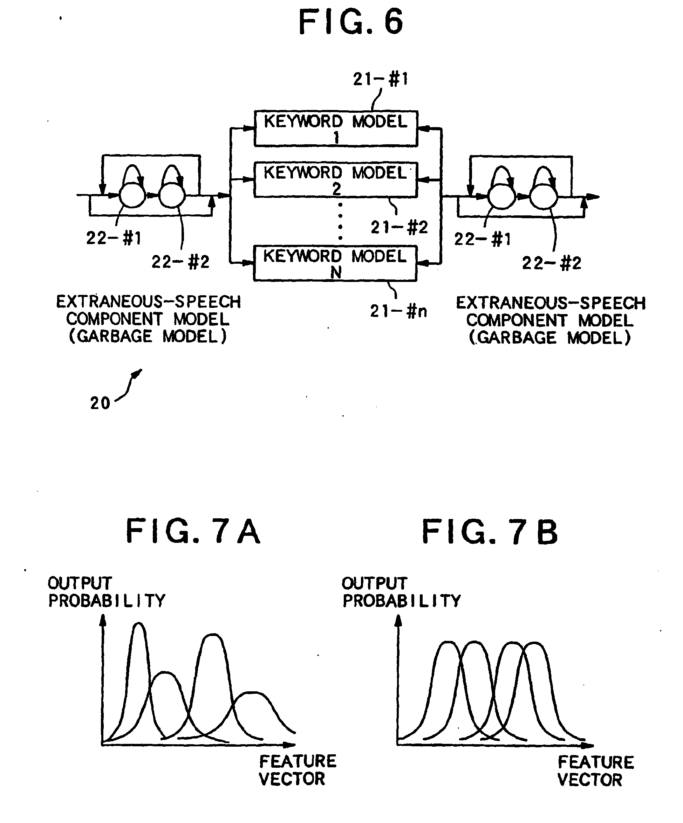

A preferred embodiment of a speech recognition apparatus according to the present invention will now be described with reference to FIGS. 6 to 8.

The preferred embodiment differs from the previously described embodiment in that instead of the single extraneous-speech component HMM, i.e., the single extraneous-speech component model obtained by combining the feature values of a plurality of extraneous-speech components and stored in the garbage model database, a plurality of extraneous-speech component HMMs are stored in the garbage model database, with each extraneous-speech component HMM having feature data of a plurality of extraneous-speech components. In other respects, the configuration of this embodiment is similar to that of the previously described embodiment. Thus, the same components as those in the previously described embodiment are denoted by the same reference numerals as the corresponding components and description thereof will be omitted.

FIG. 6 is a diagram showing a speech language model of a recognition network using HMM according to this embodiment, FIG. 7 is exemplary graphs showing feature vector and output probability of the extraneous-speech component HMMs according to this embodiment.

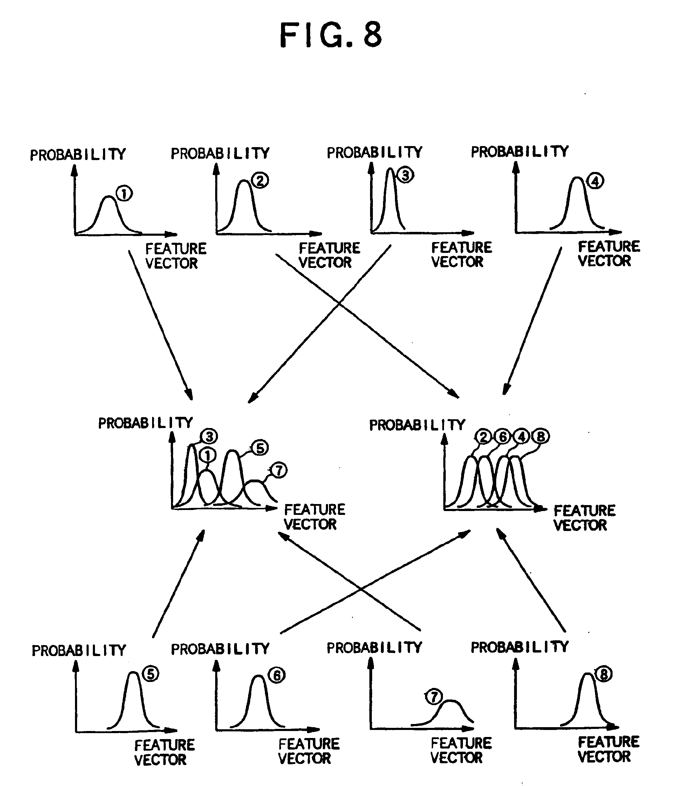

FIG. 8 is graphs showing output probability of an extraneous-speech component HMM obtained by integrating a plurality of extraneous-speech component HMMs.

Furthermore, according to this embodiment, it is explained to assume that two component HMMs models of extraneous-speech are stored in the garbage model database.

In a speech language model 20 here, as is the case with the previously described embodiment, a keyword and extraneous speech contained in spontaneous speech are identified by matching the keyword with the keyword models 21 and the extraneous speech with each extraneous-speech component models 22a and 22b respectively to recognize the keyword in the spontaneous speech.

According to the previously described embodiment, one extraneous-speech component HMM is generated beforehand by acquiring speech data of each phonemes uttered by multiple people, extracting feature patterns of each phonemes, and learning feature pattern data of each phonemes based on the extracted feature patterns of each phonemes. According to this embodiment, however, one extraneous-speech component HMM is generated for each group of a plurality of phonemes, vowels, or consonants and the generated each extraneous-speech component HMMs are integrated into one or more extraneous-speech component HMMs.

For example, two extraneous-speech component HMMs obtained by integrating eight extraneous-speech component HMMs through learning based on acquired speech data have features shown in FIG. 7.

Specifically, as shown in FIG. 8, eight HMMs are integrated into the two HMMs shown in FIGS. 7(a) and 7(b) in such a way that there will be no interference among other HMMs and feature vectors.

Thus, according to this embodiment, each integrated feature vectors have the features of each original extraneous-speech component HMMs as shown in FIG. 8.

Specifically, the output probability of the feature vector (speech vector) of each HMM according to this embodiment is given by Eq. (3) based on Eq. (2). The output probability of the feature vector (speech vector) of each integrated extraneous-speech component HMM is calculated using the maximum values based on the calculated output probabilities of each calculated original extraneous-speech component HMMs.

$$b_i(x) \cong \max\left( \frac{\lambda_{i1} b_{i1}(x)_{HMM1}}{N}, \frac{\lambda_{i2} b_{i2}(x)_{HMM1}}{N}, \frac{\lambda_{i1} b_{i1}(x)_{HMM2}}{N}, \frac{\lambda_{i2} b_{i2}(x)_{HMM2}}{N} \right) \text{ Eq. (3)}$$

According to this embodiment, The HMM which represents the maximum output probability is the HMM which is matched with the extraneous speech to be recognized, i.e., the HMM to be used for matching, and its likelihood is calculated.

The resulting graph shows the output probability versus the feature vector of the frame analyzed by the speech analyzer 103.

According to this embodiment, extraneous-speech component HMMs are generated in this way and stored in the garbage model database.

According to this embodiment, the likelihood calculator 106 calculates likelihood on a frame-by-frame basis using the extraneous-speech component HMMs generated in the manner described above, keyword HMMs, and frame-by-frame feature values. The calculated likelihood is output to the matching processor 107.

Thus, according to this embodiment, since each extraneous-speech component HMM has feature values of speech ingredients of a plurality of extraneous-speech components, degradation of identification accuracy which would occur when a plurality of feature values are combined into a single extraneous-speech component HMM with the previously described embodiment can be prevented, and extraneous speech can be identified properly without increasing the data quantity of extraneous-speech component HMMs stored in the garbage model database.

Incidentally, although extraneous-speech component models are generated based on syllables according to this embodiment, of course, they may be generated based on phonemes or other units.

Furthermore, an HMM which represents feature values of extraneous-speech components may be stored for each group of a plurality of each type of phonemes, or each vowels, and consonants.

In the likelihood calculation process in this case, the feature values are computed on a frame-by-frame basis using each extraneous-speech component HMM and likelihood of each extraneous-speech component.

Furthermore, although the keyword recognition process is performed by the speech recognition apparatus described above according to this embodiment, the speech recognition apparatus may be equipped with a computer and recording medium and a similar keyword recognition process may be performed as the computer reads a keyword recognition program stored on the recording medium.

On this speech recognition apparatus which executes the keyword recognition processing program, a DVD or CD may be used as the recording medium.

In this case, the speech recognition apparatus will be equipped with a reading device for reading the program from the recording medium.

**Claims**

1. A speech recognition apparatus (100, 200) for recognizing at least one of keywords contained in uttered spontaneous speech, **characterized in that** said apparatus comprises:

   an extraction device (103) for extracting a spontaneous-speech feature value, which is feature value of speech ingredient of the spontaneous speech, by analyzing the spontaneous speech;
   a recognition device (106, 107, 108) for recognizing said keyword by identifying at least one of said keywords and extraneous speech contained in the spontaneous speech based on the spontaneous-speech feature value, said extraneous speech indicating non-keyword;
   an acquiring device (106) for acquiring, in advance, a keyword feature data which represents feature value of said keyword and creating keyword models; and
   a database (104, 105) in which a plurality of recognizable units are prestored, each of the recognisable units corresponding to one of phoneme or syllable as a component of the extraneous speech, said each of the recognizable units being extraneous-speech component feature data comprising: a state transition probability which represents the probability of the state transition from one state to another, and an output probability which outputs the probability that a vector will be observed when a state transitions from one state to another;

   wherein the recognition device (106, 107, 108) identifies the extraneous speech contained in the spontaneous speech based on the extracted spontaneous-speech feature value and the pre-stored recognizable units and calculates the cumulative likelihoods of all combinations of extraneous speech components and key word models across all of the spontaneous speech;
   wherein the at least one keyword is recognised by identifying at least one of said keyword and said extraneous speech using the calculated cumulative likelihoods.

2. The speech recognition apparatus (100, 200) according to any preceding claim, wherein the recognition device (106, 107, 108) comprises:

   a calculation device (106) for calculating likelihood which indicates probability that at least part of the feature value of the extracted spontaneous speech is matched with said extraneous-speech component feature data stored in said database (104, 105) and the acquired keyword feature data; wherein
   at least one of said keyword and said extraneous speech contained in the spontaneous speech is identified based on the calculated likelihood.

3. A speech recognition method of recognizing at least one of keywords contained in uttered spontaneous speech, **characterized in that** said method comprises:

   an extraction process of extracting a spontaneous-speech feature value, which is feature value of speech ingredient of the spontaneous speech, by analyzing the spontaneous speech;

a recognition process of recognizing said keyword by identifying at least one of said keyword and extraneous speech contained in the spontaneous speech based on the spontaneous-speech feature value, said extraneous speech indicating non-keyword;

a first acquiring process of acquiring in advance a keyword feature data which represents feature value of said keyword and creating keyword models; and

a second acquiring process of acquiring an extraneous-speech component feature data pre-stored in a database (104, 105), the database (104,105) in which a plurality of recognizable units are pre-stored, each of the recognizable units corresponding to one of phoneme or syllable as a component of the extraneous speech, said each of the recognizable units being extraneous-speech component feature data comprising:

a state transition probability which represents the probability of the state transition from one state to another; and an output probability which outputs the probability that a vector will be observed when a state transitions from one state to another, wherein the recognition process identifies the extraneous speech contained in the spontaneous speech based on the extracted spontaneous-speech feature value and the pre-stored recognizable units acquired extraneous-speech component feature data, and calculates the cumulative likelihoods of all combinations of extraneous speech components and keyword models across all of the spontaneous speech, wherein the at least one keyword is recognised by;,

identifying at least one of said keyword and said extraneous speech using the calculated cumulative likelihoods.

4. The speech recognition process according to any preceding claim, wherein said recognition process comprises:

a calculation process of calculating likelihood which indicates probability that at least part of the feature value of the extracted spontaneous speech is matched with the extraneous-speech component feature data stored in said database (104, 105) and the acquired keyword feature data; wherein

at least one of said keyword and said extraneous speech contained in the spontaneous speech is identified based on the calculated likelihood.

5. A recording medium wherein a speech recognition program is recorded so as to be read by a computer, the computer included in a speech recognition apparatus (100, 200) for recognizing at least one of keywords contained in uttered spontaneous speech, **characterized in that** said program causes the computer to function as:

an extraction device (103) extracts a spontaneous-speech feature value, which is feature value of speech ingredient of the spontaneous speech, by analyzing the spontaneous speech;

a recognition device (106, 107, 108) recognizes said keyword by identifying at least one of said keywords and extraneous speech contained in the spontaneous speech based on the spontaneous-speech feature value, said extraneous speech indicating non-keyword;

an acquiring device (106) acquires, in advance, a keyword feature data which represents feature value of said keyword and creating keyword models; and

an acquiring device acquires an extraneous-speech component feature data pre-stored in a database (104, 105), the database (104,105) in which a plurality of recognizable units are pre-stored, each of the recognisable units corresponding to one of phoneme or syllable as a component of the extraneous speech, said each of the recognizable units being extraneous-speech component feature data comprising: a state transition probability which represents the probability of the state transition from one state to another; and an output probability which outputs the probability that a vector will be observed when a state transitions from one state to another, wherein the recognition device (106, 107, 108) identifies the extraneous speech contained in the spontaneous speech based on the extracted spontaneous-speech feature value and the pre-stored recognizable units and calculates the cumulative likelihoods of all combinations of extraneous speech components and keyword models across all of the spontaneous speech,

wherein the at least one keyword is recognised by identifying at least one of said keyword and said extraneous speech using the calculated cumulative likelihoods.

6. The recording medium according to any preceding claim, wherein the program further causes the computer to function as:

a calculation device (106) for calculating likelihood which indicates probability that at least part of the feature value of the extracted spontaneous speech is matched with the extraneous-speech component feature data stored in said database (104, 105) and the acquired keyword feature data; wherein

at least one of said keyword and said extraneous speech contained in the spontaneous speech is identified based on the calculated likelihood.

**Patentansprüche**

1. Spracherkennungsvorrichtung (100, 200) zum Erkennen mindestens eines von in geäußerter spontaner Sprache enthaltenen Schlüsselwörtern, **dadurch gekennzeichnet, dass** die genannte Vorrichtung Folgendes umfasst:

eine Auszugsvorrichtung (103) zum Ausziehen eines Spontansprache-Merkmalswerts, bei dem es sich um einen Merkmalswert von Sprachinhalt der spontanen Sprache handelt, durch Analysieren der spontanen Sprache;

eine Erkennungsvorrichtung (106, 107, 108) zum Erkennen des genannten Schlüsselworts durch Identifizieren von in der spontanen Sprache enthaltenen Schlüsselwörtern und/oder enthaltener irrelevanter Sprache, basierend auf dem Spontansprache-Merkmalswert, wobei die genannte irrelevante Sprache Nichtschlüsselwörter angibt;

eine Erfassungsvorrichtung (106) zum Erfassen, im Voraus, von Schlüsselwort-Merkmalsdaten, die einen Merkmalswert des genannten Schlüsselworts repräsentieren und zum Erzeugen von Schlüsselwortmodellen; und

eine Datenbank (104, 105), in der mehrere erkennbare Einheiten vorabgespeichert sind, wobei die erkennbaren Einheiten jeweils einem Phonem oder einer Silbe als Komponente der irrelevanten Sprache entsprechen, wobei es sich bei den genannten erkennbaren Einheiten jeweils um Komponentenmerkmalsdaten irrelevanter Sprache handelt, die Folgendes umfassen: eine Zustandsübergangswahrscheinlichkeit, die die Wahrscheinlichkeit des Zustandsübergangs von einem Zustand in einen anderen repräsentiert, und eine Ausgabewahrscheinlichkeit, die die Wahrscheinlichkeit ausgibt, dass ein Vektor beobachtet wird, wenn ein Zustand von einem Zustand in einen anderen übergeht;

wobei die Erkennungsvorrichtung (106, 107, 108) die in der spontanen Sprache enthaltene irrelevante Sprache basierend auf dem ausgezogenen Spontansprache-Merkmalswert und den vorabgespeicherten erkennbaren Einheiten identifiziert und die kumulativen Likelihoods aller Kombinationen von Komponenten irrelevanter Sprache und Schlüsselwortmodellen über die gesamte spontane Sprache berechnet;

wobei das mindestens eine Schlüsselwort erkannt wird, indem das genannte Schlüsselwort und/oder die genannte irrelevante Sprache unter Verwendung der berechneten kumulativen Likelihoods identifiziert wird.

2. Spracherkennungsvorrichtung (100, 200) nach einem der vorangehenden Ansprüche, wobei die Erkennungsvorrichtung (106, 107, 108) Folgendes umfasst:

eine Berechnungsvorrichtung (106) zum Berechnen von Likelihood, die die Wahrscheinlichkeit angibt, dass mindestens ein Teil des Merkmalswerts der ausgezogenen spontanen Sprache mit den in der genannten Datenbank (104, 105) gespeicherten Komponentenmerkmalsdaten irrelevanter Sprache und den erfassten Schlüsselwort-Merkmalsdaten zusammenpasst; wobei

das genannte Schlüsselwort und/oder die genannte irrelevante Sprache, die in der spontanen Sprache enthalten sind, basierend auf der berechneten Likelihood identifiziert werden.

3. Spracherkennungsverfahren des Erkennens mindestens eines von in geäußerter spontaner Sprache enthaltenen Schlüsselwörtern, **dadurch gekennzeichnet, dass** das genannte Verfahren Folgendes umfasst:

ein Auszugsverfahren des Ausziehens eines Spontansprache-Merkmalswerts, bei dem es sich um einen Merkmalswert von Sprachinhalt der spontanen Sprache handelt, durch Analysieren der spontanen Sprache;

ein Erkennungsverfahren des Erkennens des genannten Schlüsselworts durch Identifizieren des bzw. der genannten, in der spontanen Sprache enthaltenen Schlüsselworts und/oder irrelevanten Sprache, basierend auf dem Spontansprache-Merkmalswert, wobei die genannte irrelevante Sprache Nichtschlüsselwörter angibt;

ein erstes Erfassungsverfahren des Erfassens, im Voraus, von Schlüsselwort-Merkmalsdaten, die einen Merkmalswert des genannten Schlüsselworts repräsentieren und des Erzeugens von Schlüsselwortmodellen; und

ein zweites Erfassungsverfahren des Erfassens von in einer Datenbank (104, 105) vorabgespeicherten Komponentenmerkmalsdaten irrelevanter Sprache, die Datenbank (104, 105), in der mehrere erkennbare Einheiten vorabgespeichert sind, wobei die erkennbaren Einheiten jeweils einem Phonem oder einer Silbe als Komponente der irrelevanten Sprache entsprechen, wobei es sich bei den genannten erkennbaren Einheiten jeweils um Komponentenmerkmalsdaten irrelevanter Sprache handeln, die Folgendes umfassen:

eine Zustandsübergangswahrscheinlichkeit, die die Wahrscheinlichkeit des Zustandübergangs von einem Zustand in einen anderen repräsentiert; und eine Ausgabewahrscheinlichkeit, die die Wahrscheinlichkeit ausgibt, dass ein Vektor beobachtet wird, wenn ein Zustand von einem Zustand in einen anderen übergeht, wobei das Erkennungsverfahren die in der spontanen Sprache enthaltene irrelevante Sprache basierend auf dem ausgezogenen Spontansprache-Merkmalswert und den vorabgespeicherten erkennbaren Einheiten identifiziert, erfasste Komponentenmerkmalsdaten irrelevanter Sprache, und die kumulativen Likelihoods aller Kombinationen von Komponenten irrelevanter Sprache und Schlüsselwortmodellen über die gesamte spontane Sprache berechnet, wobei das mindestens eine Schlüsselwort durch Folgendes erkannt wird:
Identifizieren des genannten Schlüsselworts und/oder der genannten irrelevanten Sprache unter Verwendung der berechneten kumulativen Likelihoods.

4. Spracherkennungsverfahren nach einem der vorangehenden Ansprüche, wobei das genannte Erkennungsverfahren Folgendes umfasst:

ein Berechnungsverfahren des Berechnens von Likelihood, die die Wahrscheinlichkeit angibt, dass mindestens ein Teil des Merkmalswerts der ausgezogenen spontanen Sprache mit den in der genannten Datenbank (104, 105) gespeicherten Komponentenmerkmalsdaten irrelevanter Sprache und den erfassten Schlüsselwort-Merkmalsdaten zusammenpasst; wobei
das genannte Schlüsselwort und/oder die genannte irrelevante Sprache, die in der spontanen Sprache enthalten sind, basierend auf der berechneten Likelihood identifiziert werden.

5. Aufzeichnungsmedium, auf dem ein Spracherkennungsprogramm aufgezeichnet ist, um von einem Computer gelesen zu werden, wobei der Computer in einer Spracherkennungsvorrichtung (100, 200) enthalten ist, um mindestens eines von in geäußerter spontaner Sprache enthaltenen Schlüsselwörtern zu erkennen, **dadurch gekennzeichnet, dass** das genannte Programm den Computer veranlasst, wie folgt zu funktionieren:

eine Auszugsvorrichtung (103) zieht einen Spontansprache-Merkmalswert, bei dem es sich um einen Merkmalswert von Sprachinhalt der spontanen Sprache handelt, durch Analysieren der spontanen Sprache, aus;
eine Erkennungsvorrichtung (106, 107, 108) erkennt das genannte Schlüsselworts durch Identifizieren von in der spontanen Sprache enthaltenen Schlüsselwörtern und/oder irrelevanter Sprache, basierend auf dem Spontansprache-Merkmalswert, wobei die genannte irrelevante Sprache Nichtschlüsselwörter angibt;
eine Erfassungsvorrichtung (106) erfasst, im Voraus, Schlüsselwort-Merkmalsdaten, die einen Merkmalswert des genannten Schlüsselworts repräsentieren und erzeugt Schlüsselwortmodelle; und
eine Erfassungsvorrichtung erfasst in einer Datenbank (104, 105) vorabgespeicherte Komponentenmerkmalsdaten irrelevanter Sprache, die Datenbank (104, 105), in der mehrere erkennbare Einheiten vorabgespeichert sind, wobei die erkennbaren Einheiten jeweils einem Phonem oder einer Silbe als Komponente der irrelevanten Sprache entsprechen, wobei es sich bei den genannten erkennbaren Einheiten jeweils um Komponentenmerkmalsdaten irrelevanter Sprache handeln, die Folgendes umfassen: eine Zustandsübergangswahrscheinlichkeit, die die Wahrscheinlichkeit des Zustandübergangs von einem Zustand in einen anderen repräsentiert; und eine Ausgabewahrscheinlichkeit, die die Wahrscheinlichkeit ausgibt, dass ein Vektor beobachtet wird, wenn ein Zustand von einem Zustand in einen anderen übergeht, wobei die Erkennungsvorrichtung (106, 107, 108) die in der spontanen Sprache enthaltene irrelevante Sprache basierend auf dem ausgezogenen Spontansprache-Merkmalswert und den vorabgespeicherten erkennbaren Einheiten identifiziert, und die kumulativen Likelihoods aller Kombinationen von Komponenten irrelevanter Sprache und Schlüsselwortmodellen über die gesamte spontane Sprache berechnet,

wobei das mindestens eine Schlüsselwort erkannt wird, indem das genannte Schlüsselwort und/oder die genannte irrelevante Sprache unter Verwendung der berechneten Wahrscheinlichkeiten identifiziert wird.

6. Aufzeichnungsmedium nach einem der vorangehenden Ansprüche, wobei das Programm den Computer weiter veranlasst, als Folgendes zu funktionieren:

eine Berechnungsvorrichtung (106) zum Berechnen von Likelihood, die die Wahrscheinlichkeit angibt, dass mindestens ein Teil des Merkmalswerts der ausgezogenen spontanen Sprache mit den in der genannten Datenbank (104, 105) gespeicherten Komponentenmerkmalsdaten irrelevanter Sprache und den erfassten Schlüsselwort-Merkmalsdaten zusammenpasst; wobei
das genannte Schlüsselwort und/oder die genannte irrelevante Sprache, die in der spontanen Sprache enthalten sind, basierend auf der berechneten Likelihood identifiziert werden.

**Revendications**

1. Appareil de reconnaissance vocale (100, 200) pour reconnaître au moins un mot-clé parmi d'autres contenus dans la parole spontanée prononcée, **caractérisé en ce que** ledit appareil comprend :

   un dispositif d'extraction (103) pour extraire une valeur caractéristique de la parole spontanée, qui est une valeur caractéristique d'un ingrédient vocal de la parole spontanée, en analysant la parole spontanée ;
   un dispositif de reconnaissance (106, 107, 108) pour reconnaître ledit mot-clé en identifiant au moins un desdits mots-clés et des éléments vocaux accessoires contenus dans la parole spontanée en se basant sur la valeur caractéristique de la parole spontanée, lesdits éléments vocaux accessoires indiquant des mots qui ne sont pas des mots-clés ;
   un dispositif d'acquisition (106) pour acquérir, à l'avance, une donnée caractéristique d'un mot-clé qui représente une valeur caractéristique dudit mot-clé et pour créer des modèles de mots-clés ; et
   une base de données (104, 105) dans laquelle une pluralité d'unités reconnaissables sont pré-enregistrées, chacune de ces unités reconnaissables correspondant soit à un phonème, soit à une syllabe comme un élément vocal accessoire, ladite chacune des unités reconnaissables étant une donnée caractéristique d'un élément vocal accessoire comprenant : une probabilité de transition d'état qui représente la probabilité de la transition d'état d'un état à un autre, et une probabilité de sortie qui sort la probabilité qu'un vecteur sera observé lorsqu'un état passe d'un état à un autre ;
   dans lequel le dispositif de reconnaissance (106, 107, 108) identifie les éléments vocaux accessoires contenus dans la parole spontanée en se basant sur la valeur caractéristique de la parole spontanée extraite et sur les unités reconnaissables pré-enregistrées, et calcule les probabilités cumulatives de toutes les combinaisons d'éléments vocaux accessoires et de modèles de mots-clés sur la totalité de la parole spontanée ;
   dans lequel le au moins un mot-clé est reconnu en identifiant au moins un dudit mot-clé et desdits éléments vocaux accessoires en utilisant les probabilités cumulatives calculées.

2. Appareil de reconnaissance vocale (100, 200) selon l'une quelconque des revendications précédentes, dans lequel le dispositif de reconnaissance (106, 107, 108) comprend :

   un dispositif de calcul (106) pour calculer la probabilité qui indique la vraisemblance qu'au moins une partie de la valeur caractéristique de la parole spontanée extraite est appariée avec lesdites données caractéristiques d'éléments vocaux accessoires enregistrées dans ladite base de données (104, 105) et les données caractéristiques de mots-clés acquises ; dans lequel
   au moins un dudit mot-clé et desdits éléments vocaux accessoires contenus dans la parole spontanée est identifié en se basant sur la probabilité calculée ;

3. Procédé de reconnaissance vocale pour reconnaître au moins un mot-clé parmi d'autres contenus dans la parole spontanée prononcée, **caractérisé en ce que** ledit procédé comprend :

   un processus d'extraction consistant à extraire une valeur caractéristique de la parole spontanée, qui est une valeur caractéristique d'un ingrédient vocal de la parole spontanée, en analysant la parole spontanée ;
   un processus de reconnaissance consistant à reconnaître ledit mot-clé en identifiant au moins un dudit mot-clé et des éléments vocaux accessoires contenus dans la parole spontanée en se basant sur la valeur caractéristique de la parole spontanée, lesdits éléments vocaux accessoires indiquant des mots qui ne sont pas des mots-clés ;
   un premier processus d'acquisition consistant à acquérir à l'avance une donnée caractéristique d'un mot-clé qui représente une valeur caractéristique dudit mot-clé et à créer des modèles de mots-clés ; et
   un deuxième processus d'acquisition de données caractéristiques d'éléments vocaux accessoires pré-enregistrées dans une base de données (104, 105), la base de données (104, 105) dans laquelle une pluralité d'unités reconnaissables sont pré-enregistrées, chacune de ces unités reconnaissables correspondant soit à un phonème, soit à une syllabe comme un élément vocal accessoire, ladite chacune des unités reconnaissables étant une donnée caractéristique d'un élément vocal accessoire comprenant :
   une probabilité de transition d'état qui représente la probabilité de la transition d'état d'un état à un autre ; et
   une probabilité de sortie qui sort la probabilité qu'un vecteur sera observé lorsqu'un état passe d'un état à un autre, dans lequel le processus de reconnaissance identifie les éléments vocaux accessoires contenus dans la parole spontanée en se basant sur la valeur caractéristique de la parole spontanée extraite et sur les unités reconnaissables pré-enregistrées et les données caractéristiques des éléments vocaux accessoires acquises, et calcule les probabilités cumulatives de toutes les combinaisons d'éléments vocaux accessoires et de modèles de mots-clés sur la totalité de la parole spontanée, dans lequel le au moins un mot-clé est reconnu en : identifiant au moins un dudit mot-clé et desdits éléments vocaux accessoires en utilisant les probabilités cumulatives calculées.

4. Appareil de reconnaissance vocale selon l'une quelconque des revendications précédentes, dans lequel le dispositif de reconnaissance comprend :

un processus de calcul consistant à calculer la probabilité qui indique la vraisemblance qu'au moins une partie de la valeur caractéristique de la parole spontanée extraite est appariée avec les données caractéristiques des éléments vocaux accessoires enregistrées dans ladite base de données (104, 105) et les données caractéristiques de mots-clés acquises ; dans lequel au moins un dudit mot-clé et desdits éléments vocaux accessoires contenus dans la parole spontanée est identifié en se basant sur la probabilité calculée.

5. Support d'enregistrement sur lequel un programme de reconnaissance vocale est enregistré de façon à être lu par un ordinateur compris dans un appareil de reconnaissance vocale (100, 200) pour reconnaître au moins un des mots-clés contenus dans la parole spontanée prononcée, **caractérisé en ce que** ledit programme fait fonctionner l'ordinateur comme :

un dispositif d'extraction (103) extrait une valeur caractéristique de parole spontanée, qui est une valeur caractéristique d'un ingrédient vocal de la parole spontanée, en analysant la parole spontanée ; un dispositif de reconnaissance (106, 107, 108) reconnaît ledit mot-clé en identifiant au moins un desdits mots-clés et des éléments vocaux accessoires contenus dans la parole spontanée en se basant sur la valeur caractéristique de la parole spontanée, lesdits éléments vocaux accessoires indiquant des mots qui ne sont pas des mots-clés ; un dispositif d'acquisition (106) acquiert, à l'avance, une donnée caractéristique d'un mot-clé qui représente une valeur caractéristique dudit mot-clé et crée des modèles de mots-clés ; et un dispositif d'acquisition acquiert des données caractéristiques d'éléments vocaux accessoires pré-enregistrées dans une base de données (104, 105), la base de données (104, 105) dans laquelle une pluralité d'unités reconnaissables sont pré-enregistrées, chacune de ces unités reconnaissables correspondant soit à un phonème, soit à une syllabe comme un élément vocal accessoire, ladite chacune des unités reconnaissables étant des données caractéristiques d'éléments vocaux accessoires comprenant : une probabilité de transition d'état qui représente la probabilité de la transition d'état d'un état à un autre ; et une probabilité de sortie qui sort la probabilité qu'un vecteur sera observé lorsqu'un état passe d'un état à un autre, dans lequel le dispositif de reconnaissance (106, 107, 108) identifie les éléments vocaux accessoires contenus dans la parole spontanée en se basant sur la valeur caractéristique de la parole spontanée extraite et sur les unités reconnaissables pré-enregistrées, et calcule les probabilités cumulatives de toutes les combinaisons d'éléments vocaux accessoires et de modèles de mots-clés sur la totalité de la parole spontanée, dans lequel le au moins un mot-clé est reconnu en identifiant au moins un dudit mot-clé et desdits éléments vocaux accessoires en utilisant les probabilités cumulatives calculées.

6. Support d'enregistrement selon l'une quelconque des revendications précédentes, dans lequel le programme fait en outre fonctionner l'ordinateur comme :

un dispositif de calcul (106) pour calculer la probabilité qui indique la vraisemblance qu'au moins une partie de la valeur caractéristique de la parole spontanée extraite est appariée avec les données caractéristiques des éléments vocaux accessoires enregistrées dans ladite base de données (104, 105) et les données caractéristiques de mots-clés acquises ; dans lequel au moins un dudit mot-clé et desdits éléments vocaux accessoires contenus dans la parole spontanée est identifié en se basant sur la probabilité calculée.

# FIG. 1

11-#1

KEYWORD MODEL
1

KEYWORD MODEL
2

11-#2

KEYWORD MODEL
N

11-#n

12a

EXTRANEOUS-SPEECH
COMPONENT MODEL
(GARBAGE MODEL)

12b

EXTRANEOUS-SPEECH
COMPONENT MODEL
(GARBAGE MODEL)

10

# FIG. 2

# FIG. 3A

------ EXTRANEOUS-SPEECH HMM

——— EXTRANEOUS-SPEECH COMPONENT HMM

CUMULATIVE LIKELIHOOD

TIME

INTERVAL IN WHICH EXTRANEOUS SPEECH IS UTTERED

INTERVAL IN WHICH KEYWORD IS UTTERED

INTERVAL IN WHICH EXTRANEOUS SPEECH IS UTTERED

# FIG. 3B

CUMULATIVE LIKELIHOOD

TIME

INTERVAL IN WHICH EXTRANEOUS SPEECH IS UTTERED

INTERVAL IN WHICH KEYWORD IS UTTERED

INTERVAL IN WHICH EXTRANEOUS SPEECH IS UTTERED

# FIG. 4

MICROPHONE 101 → INPUT PROCESSOR (102) → SPEECH ANALYZER (103) → LIKELIHOOD CALCULATOR (106) → MATCHING PROCESSOR (107) → DETERMIN-ING DEVICE (108) → EXTERNAL OUTPUT

KEYWORD MODEL DATABASE (104)

GARBAGE MODEL DATABASE (105)

100

EP 1 355 295 B1

# FIG. 5

S11 — ( INPUT SPONTANEOUS-SPEECH )

S12 — EXTRACT SPONTANEOUS SPEECH SEGMENTS

S13 — DIVIDE SPONTANEOUS SPEECH INTO FRAMES

S14 — EXTRACT FEATURE VECTOR

S15 — CALCULATE LIKELIHOOD OF MATCH WITH EACH KEYWORD HMM

S16 — CALCULATE LIKELIHOOD OF MATCH WITH EXTRANEOUS-SPEECH COMPONENT HMM

S17 — MATCHING PROCESS

LAST FRAME? — NO
S18 — YES

S19 — OUTPUT HIGHEST CUMULATIVE LIKELIHOOD FOR EACH KEYWORD TO DETERMINING DEVICE

S20 — EXTERNAL OUTPUT KEYWORD WITH HIGHEST CUMULATIVE LIKELIHOOD AS RECOGNIZED RESULT

( END )

# FIG. 6

21-#1

KEYWORD MODEL
1

KEYWORD MODEL
2

21-#2

KEYWORD MODEL
N

21-#n

22-#1

22-#2

EXTRANEOUS-SPEECH
COMPONENT MODEL
(GARBAGE MODEL)

22-#1

22-#2

EXTRANEOUS-SPEECH
COMPONENT MODEL
(GARBAGE MODEL)

20

# FIG. 7A

OUTPUT
PROBABILITY

FEATURE
VECTOR

# FIG. 7B

OUTPUT
PROBABILITY

FEATURE
VECTOR

# FIG. 8